# EUROPEAN PATENT SPECIFICATION

(11) **EP 1 749 713 B1**
(45) Date of publication and mention of the grant of the patent: **26.03.2008**
(21) Application number: 06015537.1
(22) Date of filing: 26.07.2006
(51) Int. Cl.: B60R 22/20

(54) **Seat belt assembly and method of installation**
Sicherheitsgurtanordnung und deren Einbauverfahren
Agencement de ceinture de sécurité et procédé d'installation

(30) Priority: 04.08.2005 US 705562 P
(43) Date of publication of application: 07.02.2007
(73) Proprietor: KEY SAFETY SYSTEMS, INC., Sterling Heights, MI 48314 (US)
(72) Inventor: Koning, Richard W., Yale, Michigan 48097 (US); Refior, Lawrence M., Romeo, Michigan 48065 (US); Mann, Ravinder, Sterling Heights, Michigan 48314 (US)
(74) Representative: Gislon, Gabriele

(56) References cited:
- EP-A- 0 639 485
- US-A- 4 682 790
- US-A- 4 871 192
- US-A- 4 982 981
- US-A- 5 050 907
- US-A- 5 769 456
- US-A1- 2002 011 749

## Description

The present invention relates to a height adjusting mechanism for a web guide of a seat belt system.

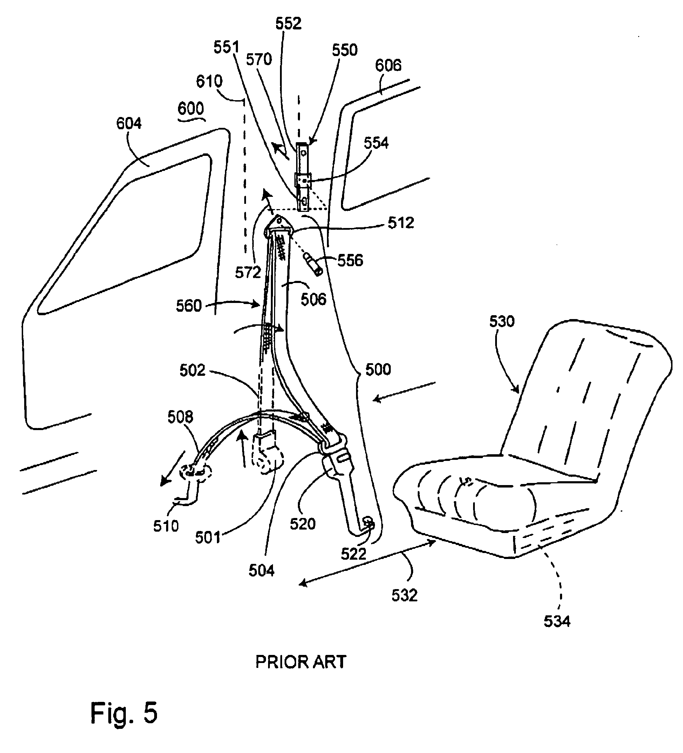

Figure 5 shows a portion of a passenger compartment 600 of a typical automotive vehicle 602. The front and rear doors and windows 604, 606 are shown diagrammatically with a B- pillar 610 located between them. Figure 5 also shows the components of a typical prior art three-point seat belt system 500. The three-point seat belt system 500 includes a seat belt retractor 501 and a length of seat belt webbing 502. A tongue 504 slides on the seat belt webbing and divides the seat belt webbing into a shoulder belt portion 506 and a lap belt portion 508. The lap belt portion 508 of the seat belt webbing is secured by an anchor 510 to the vehicle floor or another structural component of the vehicle. The shoulder belt portion of the seat belt webbing passes through a web guide 512, commonly called a D-ring, which typically has a support surface over which the shoulder belt slides. The terms web guide and D-ring are used interchangeably. US 5 601 311 may be referred to for an example of a typical web guide.
EP 0639485 discloses a fastening system for safety belt within a motor vehicle, corresponding to the preamble of claim 1. In Fig. 1 is shown said system comprising a safety belt (6), an automatic belt retracting device (5) and a vertical belt adjustment device (7) or the like. The mentioned components are in the form of a structural unit (4) which is premounted on a supporting part (17) in the interior of a motor vehicle, for example on a central column (3) as shown in Fig.3 and Fig.4. Said fastening system allows to substantially reduce the manufacturing outlay and the assembly time.
US 5769456 relates to a carrier unit for the functional parts of a safety belt system, such unit being adapted to be fitted to a motor vehicle anchorage. The safety belt carrier unit comprises a carrier unit and functional parts of a safety belt system connected to said carrier unit, wherein at least one one of said functional parts is displaceable relative to the carrier unit. The belt retractor (12) is pre-fitted on the carrier unit (10) in the bottom zone thereof and is guided for displacement by lateral displacement projections (14) formed on the belt retractor (12). On actuation of a tightening mechanism (31) the clamping mechanism (33) is moved to tighten the strap clamped by the clamping mechanism (33), so that in the case of crash the entire load is taken by the tightening mechanism (31) and the belt retractor (12) has no additional forces to take.
US 2002/0011749 discloses a rerouting device, with a friction-reducing coating, for a safety belt of a vehicle which is adapted to be mounted on a support element of the vehicle and to have a seat belt guided therethrough. Said device comprises a sheet steel body formed with an elongated eye through which a seat belt can be passed, a belt riding section and a portion adapted to be fixed to a supporting portion of a vehicle body.
US 4982981 relates to a holding mechanism for a seat belt with a manually adjustable position of the strap support. The mechanism essentially comprises a body (30) pierced with slot (31), one of the sides (312) of which is provided with indents (32), a stud (40) and an elastic biasing element (60) acting on the stud and a manoeuvring lever (70). The elastic biasing element (60) acts on the stud (40) with a torque to rotate relative to the body (30) and the handling of the invention is therefore reduced to one action on the handle of the lever (70).

It is an accepted practice to mount the web guide on a vertically adjustable mechanism, which is typically called a height adjuster 550. US 5 050 907 and US 5 230 534 disclose adjusting mechanisms. The three-point seat belt system 500 includes a seat belt buckle 520 that is secured to the vehicle floor or seat frame 534. The height adjusting mechanism 550 usually includes a rail or track 552 that is secured to the upper regions of the B-pillar by one or more fasteners. The height adjusting mechanism 550 further includes a carrier 554 that can slide on the track or rail 552. The rail, track and carrier can take many forms. The carrier 554 may include a threaded bore to receive a shoulder bolt 556 that is used to secure the D-ring 512 to the carrier. Historically the track has been secured to the B-pillar by two threaded fasteners inserted in corresponding openings 551 in the track or rail. Alternatively, the lower portion of the track or rail can be formed as a hook that is received through an opening in the B-pillar, thereby securing the lower end of the track. In this design the upper end of the track is secured by a single threaded fastener. In Figure 5, for the purpose of illustration, the vehicle seat 530 has been moved rearward, see arrow 532, from a normal installed position and from the B-pillar 610 of the vehicle.

The manufacturer of the seat belt system 500 will supply the system to the automotive assembly factory in three parts: the height adjusting mechanism 550; the buckle 520; and a subassembly 560 comprising the retractor, seat belt, tongue, D-ring, and anchors.

The installation of the seat belt system into the vehicle is relatively straightforward. The track or rail 552 is moved in the direction of arrow 570 to the B-pillar 610 and secured by the required number of fasteners. The buckle 520 is secured by a fastener 522 to a mounting surface such as the vehicle floor or seat belt frame. Subsequently, the retractor 501 is secured by a bolt to a lower portion of the B-pillar. Thereafter, the web guide 512, also called a D-ring, is lifted, as indicated by arrow 572, toward the previously mounted carrier 554 and aligned with the carrier 554. With the D-ring in place, the installer obtains a shoulder bolt 556 and installs the shoulder bolt into the threaded bore.

In a manufacturing environment in which the vehicle may be moving down the assembly line, it is difficult to hold the D-ring in place and maintain the alignment of the D-ring to the carrier and then insert the shoulder bolt 556 while holding the D-ring in place. The shoulder bolt may be dropped or misplaced, adding valuable time and cost to the assembly process. The assembler must hold the D-ring in one hand, insert and thread the shoulder bolt with another hand and then, once the shoulder bolt is partially threaded to the carrier, locate, lift and use a power screwdriver to complete the installation. Each of the installation steps takes time, and under certain situations some of these installation steps have to be repeated, as these steps may not have been done properly.

These problems are overcome by the present invention which provides in claim 1 an improved height adjusting mechanism assembly for a seat belt as well as an improved method of assembly.

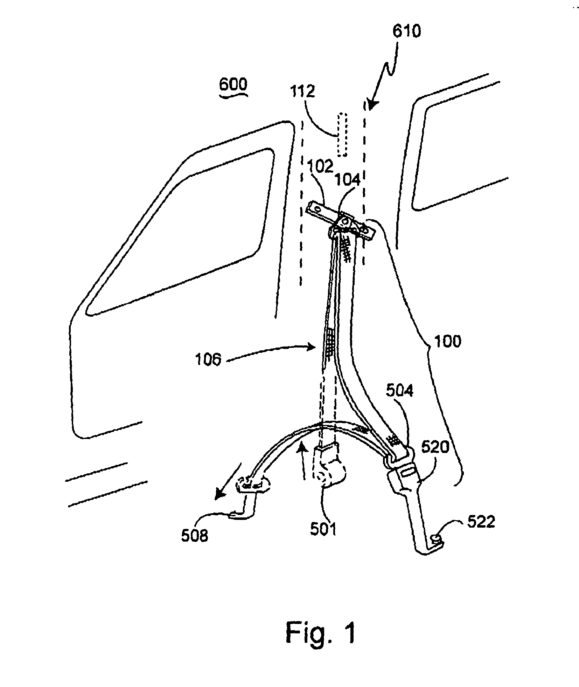

Figure 1 shows a passenger compartment of a vehicle and a seat belt system of the present invention.

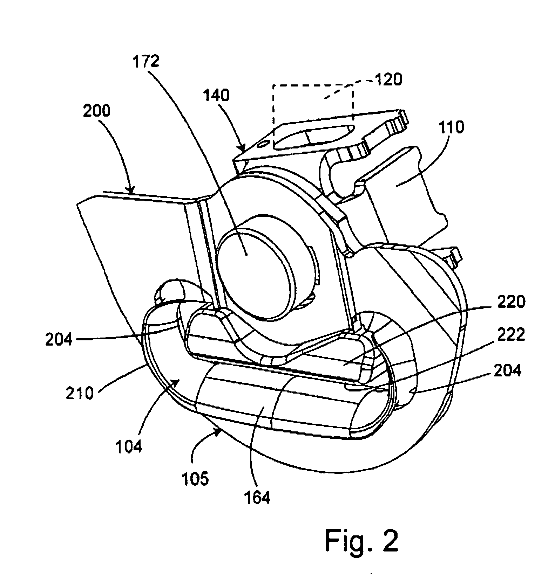

Figure 2 shows a web guide fixed to a carrier of a height adjusting mechanism.

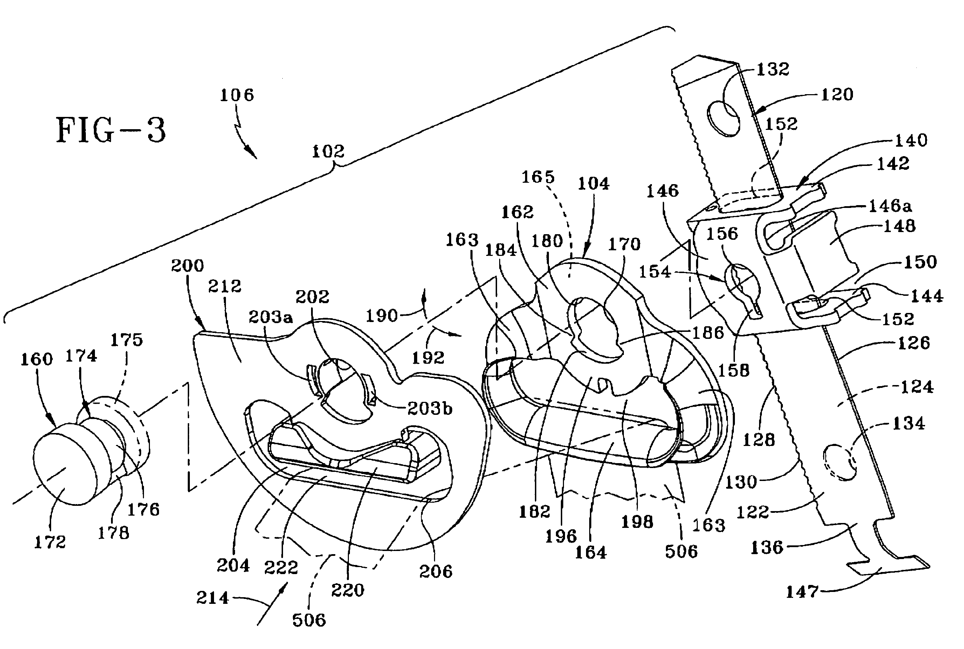

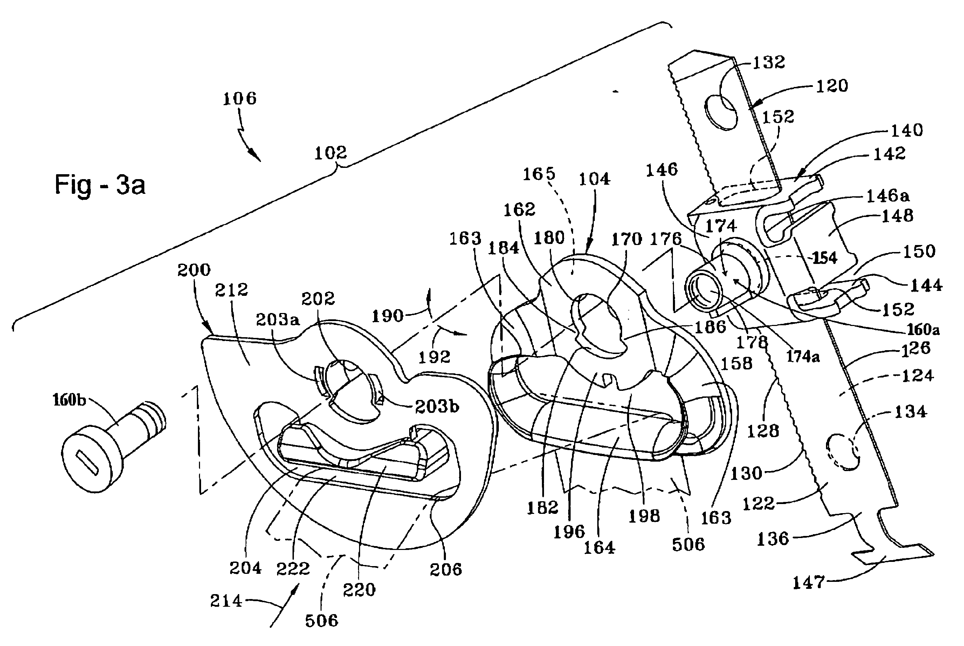

Figure 3 is an exploded view of the assembly of Figure 2.

Figure 3a is an exploded view of an alternate embodiment of the present invention.

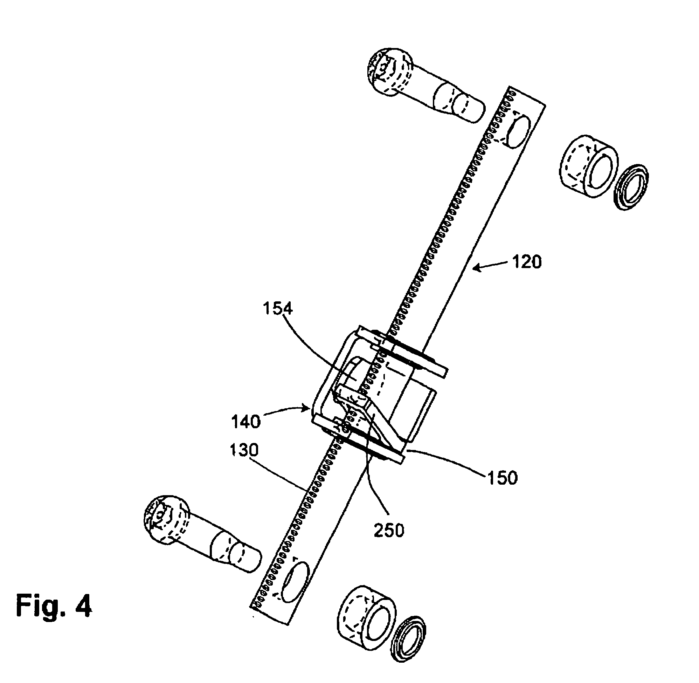

Figure 4 shows a lock mechanism.

Figure 5 shows a prior art three-point seat belt system.

Figure 1 illustrates a three-point seat belt system 100 of the present invention that has many of the components used in the prior art. The height adjusting mechanism 102 and D-ring 104 are secured together during initial assembly and encompass part of a subassembly 106. Figures 2 and 3 illustrate in greater detail the connection of the D-ring 104 and the carrier 140 of height adjusting mechanism 102.

The integration of the web guide with the height adjusting mechanism 102 prior to assembly in the vehicle provides a more efficient method of installing the three-point seat belt system in the vehicle. In the present invention there is no need for the assembler to laboriously and inefficiently secure the web guide to the carrier of the height adjusting mechanism on the vehicle assembly line. This step is accomplished during the manufacture of the subassembly 106, thereby saving time, lowering the cost of the vehicle, making the assembly process less taxing, less stressful and easier for the assembler, and increasing the efficiency of the installation process in the vehicle assembly facility. In the vehicle assembly facility, after securing the seat belt retractor 501 to the B-pillar 610, the installer obtains the height adjusting mechanism 102, moves it into the designated location on the B-pillar, with the designated location being shown by phantom lines 112, and proceeds to install the height adjusting mechanism in the manner known in the prior art. The lifting of the height adjusting mechanism 102 carries with it the web guide 104, as these parts, as mentioned, comprise a subassembly 106.

The present invention eliminates a number of assembly steps found in the prior art. The present invention includes some assembly steps found in a prior art installation. For example the anchor 510 and buckle 520 are secured to the vehicle using known techniques.

Figures 2 and 3 illustrate in greater detail the major elements of the height adjusting mechanism 102, which now includes the web guide 104 as part of the subassembly 106. The height adjusting mechanism 102 includes a bar 120 having a generally oblong cross-section. The bar 120 includes a front face 122, rear face 124, and sides 126, 128. As illustrated, the bar 120 may include a plurality of discrete teeth 130 located along one side 128. The teeth 130 are optional as locking will occur with or without the teeth, although the teeth are preferred. The bar 120 includes at least one mounting opening 132 through which a threaded bolt passes to secure the bar to the B-pillar 610. Another mounting opening 134 can be fabricated within the lower portions of the bar. An additional mounting fastener would be used in conjunction with the additional mounting opening 134. As illustrated, the bar 120 has a rearward bend 136 that forms a hook 147 in the lower portion of bar 120. The hook 147 is received in a vertically oriented opening in the B-pillar 610. The bar 120 is then rotated 90° to a vertical orientation and secu red to the B-pillar.

The carrier 140 is received in a sliding manner on the bar 120. The carrier 140 has four sides: a top 142, a bottom 144, a front face 146 and a side 148. A portion of the locking mechanism 250 shown in Figure 4 is received in a space 150 between the side 148 and the bottom 144. The top 142 and side 148 each have an oval opening 152 for receipt of the bar 120. An oval bushing (not shown) can be inserted within each respective opening 152 primarily to reduce vibration between the carrier 140 and the bar 120. The front face 146 includes a keyed opening 154 having a larger diameter portion 156 and a narrow diameter portion 158.

The web guide 104 is secured to the carrier 140 by a rivet 160. The rivet 160 prevents the axial displacement of the D-ring and carrier while permitting the D-ring freedom to rotate through a limited range relative to the carrier 120. The D-ring 104 includes a weight bearing body 162, which includes an arcuate shaped seat belt supporting surface 164 formed in a U-shaped concave groove. The supporting surface may be smooth, include a number of grooves or projections which, depending on the mounting geometry of the web guide in the vehicle, might be needed to laterally stabilize the seat belt on surface 164. As illustrated, the web guide 104 is formed as a one-piece metal stamping and may be appropriately coated to reduce friction with the woven seat belt. The web guide body 162 includes an opening 170 for receipt of the rivet 160. That portion of the body 162 facing the front face 146 of the carrier generally about the opening 170, as well as the rear of the opposing two depending sides 163, has a generally flat surface 165. This flat surface 165 facilitates rotation of the body 162 relative to the carrier. The seat belt supporting surface 164 is formed as a forwardly extending lip with a curved bottom and sides, which extend away from the surface 165 in a forward direction in Figure 3.

The rivet 160 includes a head 172 and a shaft 174. The shaft 174 includes an upper portion 176 having a generally circular cross-section. The shaft 174 includes a rectangular lower section 178 positioned below the upper portion 176. The shaft 174 is sized to fit within opening 154 of carrier 140 in a sliding manner. After the rivet 160 is located in the carrier 140, a rear rivet head 175 shown in phantom line is formed at the rear of the shaft 174 after assembly, holding the rivet 160 to the carrier 140. The rear rivet head is located against an inner surface 146a of the face 146 of the carrier 140.

In Figures 2 and 3 the web guide 104 has an opening 170. The opening 170 has a first portion 180, which has a diameter slightly greater than the diameter of the upper portion 176 of the rivet 160. The first portion 180 of the web guide 104 rotates upon the upper portion 176 of the shaft of the rivet 160. The opening 170 includes a curved lower portion 182 having a diameter greater than the first portion 180. The lower portion 182 is configured as a sector of a larger diameter circle terminating in the shoulders or stops 184, 186. The rotation of the web guide 104 in the direction of arrow 190 is limited to approximately 42 degrees whereupon the shoulder 186 contacts one side of section 178 of rivet 160. Similarly, the rotation of the ring 104 in the direction of arrow 192 is limited to -42 degrees by the engagement of the shoulder 184 with the opposing face of the rivet section 178.

A lower portion 196, of the web guide body 162, extends downward towards a surface 164 and creates a narrow spacing 198 through which the shoulder belt 506, shown in phantom line, extends. This narrow spacing can also be obtained through the use of a trim part 200.

Reference is briefly made to the alternate embodiment of Figure 3a. Those features of a rivet 160 such as the shaft 174 and the projecting rivet section 178, which provide the functions of supporting the D-ring and providing the mechanism stop, have been transferred to the carrier 140. In this embodiment the shaft 174 is part of a rivet 160a inserted within a circular fastener opening 154 in the face 146 of the carrier and secured thereto. The D-ring body 162 rotates about the upper portions 176 of shaft 174. The D-ring, and trim part 200 discussed below, are secured to the carrier by a threaded bolt 160b inserted within a threaded bore 174a of the shaft 174.

In certain situations the web guide is installed relative to a trim panel, and it may be desirable to attach a trim part 200 to the structural portions of the web guide to cover openings in the trim panel, which is for example secured to the B-pillar. The trim part 200 has an opening 202. Tabs or pins 203a,b extend rearward of the trim part 200 and are secured to the web guide body 162. The tabs or pins permit the trim part to rotate with the web guide 104. The trim part 200 includes an opening 204 below the opening 202. A surface 206 of the opening 202 is received behind a lip or groove 210 formed in the web guide 104 behind a surface 164 as shown in Figures 2 and 3. In Figures 2 and 3 the body 212 of the trim part 200 is wider than the web guide 104. When viewed in the direction of arrow 214 the trim part 200 covers the internal spaces and parts of the height adjusting mechanism and/or trim panel (not shown). The trim part 200 further includes a depending lobe 220, which creates a thin spacing 222, slightly greater than the thickness of the seat belt 506, through which the seat belt 506 slides. This lobe can also be formed in the web guide.

As known in the industry, a large trim part (not shown) known as a B-pillar trim is fitted to the B-pillar 610. The B-pillar trim receives the web guide 104 and a manual activation mechanism, which is used to release the lock mechanism of the height adjusting mechanism thereby permitting the web guide and carrier to be repositioned along the rail 120.

## Claims

1. A seat belt system (100) comprising a seat belt retractor (501), a height adjusting mechanism (102) and a web guide (104), **characterized by** the height adjusting mechanism (102) and web guide (104) being part of a subassembly (106) configured to be mounted together to a mounting surface, and a bar or track (120) and a carrier (140), the web guide (104) being secured to the carrier (140) to form the subassembly (106) **characterised by** a generally planar front surface (146) and the web guide (104) including a body (162) having a keyed mounting opening (170), the mounting opening (170) including opposing shoulder or first stops (184, 186) for limiting the rotation of the web guide (104), the front face (146) of the carrier (140) including a fastener opening (154), the system including a fastener (160, 160a) mountable to the fastener opening (154) in the carrier (140), the web guide (104) being rotatable upon a portion of the fastener (160, 160a), the fastener (160, 160a) including a mechanism stop that interferes with the first stops (184, 186) to limit the rotation of the web guide (104).

2. A seat belt system (100) according to Claim 1 wherein the fastener opening (154) in the front face (146) of the carrier (140) is either circular or keyed and wherein the fastener is either a rivet (160) secured to the carrier (140) or a combination of a rivet (160a) secured to the carrier (140) and a bolt (160b) inserted within a bore (174a) of a shaft (174).

3. A seat belt system (100) according to any of Claims 1 - 2 wherein the web guide (104) includes a body (162) having a central body portion and depending sides the central body portion and depending sides configured as a head and shoulders, the central body portion and depending sides generally adjacent the mounting opening, the web guide (104) including a flat surface (165) facing the front face of the carrier (140), the web guide (104) further including an arcuate lip extending away from the front face of the carrier (140) and away from the flat surface of the web guide (104), the arcuate lip forming a surface (164) for supporting a seat belt in a sliding manner.

4. A seat belt system (100) according to any of Claims 1 - 3 installed into a passenger compartment of a vehicle by a method including the steps of:
a. securing the web guide (104) to the carrier (140) so the height adjusting mechanism (102) and web guide (104) form a subassembly (106);
b. locating and securing the seat belt retractor (501) to a designated location within the vehicle; and
c. lifting the subassembly (106) and manipulating the height adjusting mechanism (102) to a designated location in the vehicle and securing the height adjusting mechanism (102) to the designated location, where the step of lifting the subassembly (106) simultaneously locates the web guide (104) to a designated location.

5. A seat belt system (100) according to any of Claims 1 - 4 installed into a passenger compartment of a vehicle by the method as defined in Claim 6 wherein the step of securing the web guide (104) to the carrier (140) includes riveting the web guide (104) to the carrier (140).

## Patentansprüche

1. Sicherheitsgurtsystem (100), das eine Sicherheitsgurt-Aufrollvorrichtung (501), einen Höheneinstellmechanismus (102) und eine Gurtbandführung (104) einschließt, **dadurch gekennzeichnet, dass** der Höheneinstellmechanismus (102) und die Gurtbandführung (104) Teil einer Unterbaugruppe (106) sind, dafür konfiguriert, zusammen an einer Anbringungsfläche angebracht zu werden, und eine Schiene oder Bahn (120) und einen Träger (140) umfasst, wobei die Gurtbandführung (104) an dem Träger (140) befestigt ist, um die Unterbaugruppe (106) zu bilden, **gekennzeichnet durch** eine im Allgemeinen ebene Frontfläche (146) und **dadurch,** dass die Gurtbandführung (104) einen Körper (162) einschließt, der eine verkeilte Anbringungsöffnung (170) hat, wobei die Anbringungsöffnung (170) einander gegenüberliegende Absätze oder erste Anschläge (184, 186) einschließt, um die Drehung der Gurtbandführung (104) zu begrenzen, wobei die Frontfläche (146) des Trägers (140) eine Befestigungselementöffnung (154) einschließt, wobei das System ein Befestigungselement (160, 160a) einschließt, das an der Befestigungselementöffnung (154) in dem Träger (140) angebracht werden kann, wobei die Gurtbandführung (104) auf einem Abschnitt des Befestigungselements (160, 160a) gedreht werden kann, wobei das Befestigungselement (160, 160a) einen Mechanismusanschlag einschließt, der sich mit den ersten Anschlägen (184, 186) überlagert, um die Drehung der Gurtbandführung (104) zu begrenzen.

2. Sicherheitsgurtsystem (100) nach Anspruch 1, wobei die Befestigungselementöffnung (154) in der Frontfläche (146) des Trägers (140) entweder kreisförmig oder verkeilt ist und wobei das Befestigungselement entweder ein an dem Träger (140) befestigter Niet (160) oder eine Kombination eines an dem Träger (140) befestigten Niets (160a) und eines innerhalb einer Bohrung (174a) eines Schafts (174) eingesetzten Bolzens (160b) ist.

3. Sicherheitsgurtsystem (100) nach einem der Ansprüche 1 bis 2, wobei die Gurtbandführung (104) einen Körper (162) einschließt, der einen Mittelkörperabschnitt und daran hängende Seiten hat, wobei der Mittelkörperabschnitt und die daran hängenden Seiten als ein Kopf und Schultern konfiguriert sind, wobei der Mittelkörperabschnitt und die daran hängenden Seiten im Allgemeinen an die Anbringungsöffnung angrenzen, wobei die Gurtbandführung (104) eine flache Fläche (165) einschließt, die der Frontfläche des Trägers (140) gegenüberliegt, wobei die Gurtbandführung (104) ferner eine bogenförmige Lippe einschließt, die sich von der Frontfläche des Trägers (140) weg und von der flachen Fläche der Gurtbandführung (104) weg erstreckt, wobei die bogenförmige Lippe eine Fläche (164) zum Stützen eines Sicherheitsgurtes auf eine gleitende Weise bildet.

4. Sicherheitsgurtsystem (100) nach einem der Ansprüche 1 bis 3, in einen Fahrgastraum eines Fahrzeugs eingebaut durch ein Verfahren, das folgende Schritte einschließt:
a. Befestigen der Gurtbandführung (104) an dem Träger (140), so dass der Höheneinstellmechanismus (102) und die Gurtbandführung (104) eine Unterbaugruppe (106) bilden,
b. Positionieren und Befestigen der Sicherheitsgurt-Aufrollvorrichtung (501) an einer dafür vorgesehenen Position innerhalb des Fahrzeugs und
c. Anheben der Unterbaugruppe (106) und Bewegen des Höheneinstellmechanismus (102) zu einer dafür vorgesehenen Position innerhalb des Fahrzeugs und Befestigen des Höheneinstellmechanismus (102) an der dafür vorgesehenen Position, wobei der Schritt des Anhebens der Unterbaugruppe (106) gleichzeitig die Gurtbandführung (104) an einer dafür vorgesehenen Position positioniert.

5. Sicherheitsgurtsystem (100) nach einem der Ansprüche 1 bis 4, in einen Fahrgastraum eines Fahrzeugs eingebaut durch ein Verfahren nach Anspruch 4, wobei der Schritt des Befestigens der Gurtbandführung (104) an dem Träger (140) einschließt, die Gurtbandführung (104) an den Träger (140) zu nieten.

## Revendications

1. Système de ceinture de sécurité (100) comprenant un enrouleur de ceinture de sécurité (501), un mécanisme de réglage en hauteur (102) et un guide-sangle (104), **caractérisé en ce que** le mécanisme de réglage en hauteur (102) et le guide-sangle (104) font partie d'un sous-ensemble (106) configuré pour être monté ensemble sur une surface de montage, et une barre ou rail (120) et un chariot (140), le guide-sangle (104) étant fixé au chariot (140) pour former le sous-ensemble (106), **caractérisé par** une surface avant globalement plane (146) et le guide-sangle (104) comprenant un corps (162) ayant une ouverture de montage en forme de trou de serrure (170), l'ouverture de montage (170) comprenant des butées d'épaulement ou premières butées opposées (184, 186) pour limiter la rotation du guide-sangle (104), la face avant (146) du chariot (140) comprenant une ouverture pour élément de fixation (154), le système comprenant un élément de fixation (160, 160a) pouvant être monté dans l'ouverture pour élément de fixation (154) dans le chariot (140), le guide-sangle (104) étant mobile en rotation sur une partie de l'élément de fixation (160, 160a), l'élément de fixation (160, 160a) comprenant une butée de mécanisme qui interfère avec les premières butée (184, 186) pour limiter la rotation du guide-sangle (104).

2. Système de ceinture de sécurité (100) selon la revendication 1, dans lequel l'ouverture pour élément de fixation (154) dans la face avant (146) du chariot (140) est soit circulaire, soit en forme de trou de serrure, et dans lequel l'élément de fixation est soit un rivet (160) fixé au chariot (140), soit une combinaison d'un rivet (160a) fixé au chariot (140) et d'un boulon (160b) inséré dans un alésage (174a) d'un arbre (174).

3. Système de ceinture de sécurité (100) selon l'une quelconque des revendications 1 à 2, dans lequel le guide-sangle (104) comprend un corps (162) ayant une partie de corps centrale et des côtés pendants, la partie de corps centrale et les côtés pendants ayant la configuration d'une tête et d'épaulements, la partie de corps centrale et les côtés pendants étant globalement adjacents à l'ouverture de montage, le guide-sangle (104) comprenant une surface plane (165) tournée vers la face avant du chariot (140), le guide-sangle (104) comprenant en outre une lèvre arquée s'étendant dans la direction opposée à la face avant du chariot (140) et à la surface plane du guide-sangle (104), la lèvre arquée formant une surface (164) pour supporter d'une manière coulissante une ceinture de sécurité.

4. Système de ceinture de sécurité (100) selon l'une quelconque des revendications 1 à 3, installé dans un habitacle d'un véhicule par un procédé comprenant les étapes consistant à:
a. fixer le guide-sangle (104) au chariot (140) de sorte que le mécanisme de réglage en hauteur (102) et le guide-sangle (104) forment un sous-ensemble (106);
b. positionner et fixer l'enrouleur de ceinture de sécurité (501) à un emplacement désigné dans le véhicule; et
c. lever le sous-ensemble (106) et manipuler le mécanisme de réglage en hauteur (102) à un emplacement désigné dans le véhicule et fixer le mécanisme de réglage en hauteur (102) à l'emplacement désigné, où l'étape de levage du sous-ensemble (106) positionne simultanément le guide-sangle (104) à un emplacement désigné.

5. Système de ceinture de sécurité (100) selon l'une quelconque des revendications 1 à 4, installé dans un habitacle d'un véhicule par le procédé défini selon la revendication 4, dans lequel l'étape de fixation du guide-sangle (104) au chariot (140) comprend le rivetage du guide-sangle (104) au chariot (140).
